(19) Europäisches Patentamt
European Patent Office
Office européen des brevets

(11) EP 4 636 529 A1

(12) **EUROPEAN PATENT APPLICATION**

(43) Date of publication:
22.10.2025 Bulletin 2025/43

(51) International Patent Classification (IPC):
**G05D 23/13** $^{(2006.01)}$

(21) Application number: 24171031.8

(22) Date of filing: **18.04.2024**

(52) Cooperative Patent Classification (CPC):
**G05D 23/1393; G01F 25/00; H01M 8/04007**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Volvo Construction Equipment AB**
**631 85 Eskilstuna (SE)**

(72) Inventors:
• **NEILSON, Rohan**
**721 31 VÄSTERÅS (SE)**
• **BARKAH, Dani**
**632 24 ESKILSTUNA (SE)**
• **LEMAITRE, Guillaume**
**417 21 GÖTEBORG (SE)**
• **CARNEVALI, Alessandro**
**633 62 ESKILSTUNA (SE)**

(74) Representative: **Ström & Gulliksson AB**
**P.O. Box 4188**
**203 13 Malmö (SE)**

(54) **A METHOD AND COMPUTER SYSTEM FOR A THERMAL MANAGEMENT SYSTEM**

(57) A computer system is provided, comprising processing circuitry configured to access a map (312) representing the flow ratio as a function of a position of a mixing valve (260) being configured to provide a specific ratio between at least two incoming flows based on a position of the mixing valve (260), said mixing valve (260) forming part of a thermal management system (200); obtain the temperatures of the at least two incoming flows and the temperature of at least one outlet flow of the mixing valve (260); obtain the actual flow ratio for at least one position of the mixing valve (260) based on the obtained temperatures; determine that the obtained flow ratio is different from the corresponding value of the map (312) for the same mixing valve position; and update the map (312) with the obtained flow ratio.

FIG. 2

FIG. 5

400

| 402 accessing map |
| 404 obtaining temperatures |
| 406 obtaining flow ratio |

| 408 comparing flow ratio |
| 410 updating map |

*FIG. 6*

3

**Description**

**TECHNICAL FIELD**

The disclosure relates generally to thermal applications. In particular aspects, the disclosure relates to methods and computer systems for a thermal management system. The disclosure can be applied to heavy-duty vehicles, such as trucks, buses, and construction equipment, among other vehicle types. Although the disclosure may be described with respect to a particular vehicle, the disclosure is not restricted to any particular vehicle.

**BACKGROUND**

Thermal management systems are used in various applications. In vehicles thermal management systems may e.g. be implemented to control fuel cells and battery powered drivetrains. A thermal management system is typically programmed to control flows and data input is generally required in order to obtain desired flow ratios.

In thermal management systems having a mixing valve, a map may be used defining the output (i.e. the flow ratio) based on the input (i.e. a position of the mixing valve). However, actual conditions may differ from the pre-programmed map. Deviations may occur due to manufacturing tolerances, machine-to-machine variations, and/or change over time. This usually necessitates different maps for different vehicle configurations. Hence, multiple or at least variable maps and controllers are required to suit modern vehicles.

One attempt in solving this problem is to incorporate one or more flow meters. However, flow meters in this regard would normally only be used in development for calibration/mapping and not included in production for a number of practicality reasons. Affecting-the-characteristics-they-measure relates to the development to production transition when they are removed.

The main burden is that mapping/calibrating and validating a machine or variant must be offset by production volumes and this can be particularly relevant for commercial vehicles which are more customisable and usually have higher variant to production-volume ratios compared with light vehicles.

Another method or attempt of solving this is to use more complex networks of flow diverting valves and pumps. These can adaptively divert flow as needed, allow some post production software adaption, and have some packaging advantages.

This approach may be particularly advantageous for light vehicles - however for heavy duty vehicles a network of small pumps and valves can be unappealing for a number of reasons and may offer little to no packaging advantage.

For example if an extra device is added across flow paths controlled by an existing pump and in the path of a valve then both of these devices are affected and a new calibration may be needed, however if the new device has its own pump this can be unnecessary.

In view of the above there is a need to achieve some of the flexible adaptability, which are offered by complex networks of smaller flow devices, in more consolidated systems which need to favour simplicity and robustness.

**SUMMARY**

According to a first aspect of the disclosure, a computer system is provided. The computer system comprises processing circuitry configured to: access a map representing the flow ratio as a function of a position of a mixing valve being configured to provide a specific ratio between at least two incoming flows based on a position of the mixing valve, said mixing valve forming part of a thermal management system; obtain the temperatures of the at least two incoming flows and the temperature of at least one outlet flow of the mixing valve; obtain the actual flow ratio for at least one position of the mixing valve based on the obtained temperatures; determine that the obtained flow ratio is different from the corresponding value of the map for the same valve position; and update the map with the obtained flow ratio. The first aspect of the disclosure may seek to provide a simple yet robust self-adaptive mapping of the mixing valve thereby allowing for more accurate control of the mixing valve and the associated thermal management system. A technical benefit may include better performance while still keeping the generalized characteristic as an open loop fallback strategy.

Optionally in some examples, including in at least one preferred example, the processing circuitry is further configured to obtain the total flow through the mixing valve; and update the map with the obtained flow ratio for the obtained total flow. A technical benefit may include improved accuracy, as the flow ratio may also depend on the total flow.

Optionally in some examples, including in at least one preferred example, the processing circuitry is further configured to obtain the pump speed; and update the map with the obtained flow ratio for the obtained pump speed. A technical benefit may include further improved accuracy, as the flow ratio may also depend on the total flow.

Optionally in some examples, including in at least one preferred example, the processing circuitry is further configured to obtain a time average of the temperatures of the at least two incoming flows and of the temperature of at least one outlet flow of the mixing valve; obtain a time average of the actual flow ratio for at least one position of the mixing valve based on the obtained temperatures; determine that the measured time average flow ratio is different from the corresponding value of the map for the same valve position; and update the map with the obtained time average flow ratio. A technical benefit may include improved robustness, as the time average reduces the contribution by e.g. transients.

Optionally in some examples, including in at least one preferred example, the processing circuitry is further configured to repeat the process of obtaining a measured flow ratio for a plurality of different positions of the mixing valve; and update the map with the obtained flow ratios. A technical benefit may include a comprehensive mapping of the mixing valve, allowing for an individual calibration of the thermal management system. Specifically, this may relate to areas of the map that are not frequently encountered. During start-up, shutdown, or pre-heating events the system may be able to stably hold the mixing valve in a position not frequently or nor stably encountered during normal operation so as to get better values or to determine the effect of viscosity by populating or projecting flow distribution maps or coefficients.

Optionally in some examples, including in at least one preferred example, the processing circuitry is further configured to initiate startup of the thermal management system; and update the map based on the initiated startup of the thermal management system. A technical benefit may include using high temperature differentials to improve accuracy. Optionally a sample may be given a higher priority or significance if it was captured with high temperature differential as this typically results in a higher accuracy. Similarly if two input temperatures are close together then the distribution may become more uncertain, and such values may be disregarded for map update.

Optionally in some examples, including in at least one preferred example, the processing circuitry is further configured to validate the obtained flow ratio, and update the map only when the obtained flow ratio is valid. A technical benefit may include improve accuracy and robustness, as non-valid flow ratios will be disregarded for map updating.

Optionally in some examples, including in at least one preferred example, the processing circuitry is further configured to obtain a mixing valve calibration request; sweep the mixing valve through a set of positions; and update the map with the obtained flow ratios for the set of positions. A technical benefit may include a fast approach to provide a comprehensive mapping of the mixing valve, allowing for an individual calibration of the thermal management system.

Optionally in some examples, including in at least one preferred example, the processing circuitry is further configured to obtain the total flow through the mixing valve and the pump speed; and update the map with the obtained flow ratio for the obtained total flow and for the obtained pump speed; obtain a time average of the temperatures of the at least two incoming flows and of the temperature of at least one outlet flow of the mixing valve; obtain a time average of the actual flow ratio for at least one position of the mixing valve based on the obtained temperatures; determine that the measured time average flow ratio is different from the corresponding value of the map for the same valve position; and update the map with the obtained time average flow ratio; repeat the process of obtaining a measured flow ratio for a plurality of different positions of the mixing valve and for a plurality of different values of the total flow and/or the pump speed; and update the map with the obtained flow ratios; initiate startup of the thermal management system; and update the map based on the initiated startup of the thermal management system; validate the obtained flow ratio, and update the map only when the obtained flow ratio is valid; obtain a mixing valve calibration request; sweep the mixing valve through a set of positions; and update the map with the obtained flow ratios for the set of positions. A technical benefit may include a robust and accurate mapping of the mixing valve.

According to a second aspect of the disclosure, a vehicle is provided. The vehicle comprises a thermal management system having a mixing valve, and the computer system of the first aspect. The second aspect of the disclosure may seek to provide a simple yet robust self-adaptive mapping of the mixing valve thereby allowing for more accurate control of the mixing valve and the associated thermal management system. A technical benefit may include better performance while still keeping the generalized characteristic as an open loop fallback strategy.

According to a third aspect of the disclosure, a computer-implemented method is provided. The computer-implemented method comprises accessing, by processing circuitry of a computer system, a map representing the flow ratio as a function of a position of a mixing valve forming part of a thermal management system and being configured to provide a specific ratio between at least two incoming flows based on a position of the mixing valve; obtaining, by the processing circuitry, the temperatures of the at least two incoming flows and the temperature of at least one outlet flow of the mixing valve; obtaining, by the processing circuitry, the actual flow ratio for at least one position of the mixing valve based on the obtained temperatures; determining, by the processing circuitry, that the obtained flow ratio is different from the corresponding value of the map for the same valve position; and updating, by the processing circuitry, the map with the obtained flow ratio. The third aspect of the disclosure may seek to provide a simple yet robust self-adaptive mapping of the mixing valve thereby allowing for more accurate control of the mixing valve and the associated thermal management system. A technical benefit may include better performance while still keeping the generalized characteristic as an open loop fallback strategy.

Optionally in some examples, including in at least one preferred example, the method further comprises obtaining, by the processing circuitry, the total flow through the mixing valve; and updating, by the processing circuitry, the map with the obtained flow ratio for the obtained total flow. A technical benefit may include improved accuracy, as the flow ratio may also depend on the total flow.

Optionally in some examples, including in at least one preferred example, the method further comprises obtaining, by the processing circuitry, the pump speed; and updating, by the processing circuitry, the map with the obtained flow ratio for the obtained pump speed. A technical benefit may include further improved accuracy, as the flow ratio may also depend on the total flow. Optionally in some examples, including in at least one preferred example, the method further comprises obtaining, by the processing circuitry, a time average of the temperatures of the at least two incoming flows and of the temperature of at least one outlet flow of the mixing valve; obtaining, by the processing circuitry, a time average of the actual flow ratio for at least one position of the mixing valve based on the obtained temperatures; determining, by the processing circuitry, that the measured time average flow ratio is different from the corresponding value of the map for the same valve position; and updating, by the processing circuitry, the map with the obtained time average flow ratio. A technical benefit may include improved robustness, as the time average reduces the contribution by e.g. transients. Time averaging can to be quite tricky and likely needs filtering, weighting and acceptance criteria. Measurements taken during flow transients and particularly temperature transients may suffer significant error due to delay and thermal capacitance. It appeals that the weighting and/or acceptance of a mapping value is determined according to the number of samples which could be collected before the conditions (e.g. temperatures) diverged from a narrow range around the target or initial averages thereby terminating the sample window. This can help to keep a machine suffering signal noise or highly transient operating conditions from constantly updating its maps un-necessarily or to transient-direction-specific values. Optionally (in addition or alternatively) keeping the moving average of map error to zero (or similar) is essentially performing the same process just at a higher level. E.g. if the system has been at a position on the map for longer than some threshold time it starts to slowly move the mapped value (or the error used to periodically update the map) toward the current measured value until it is interrupted by movement to a new position/distribution.

Optionally in some examples, including in at least one preferred example, the options of i) updating the map with the obtained flow ratio for the obtained total flow, ii) updating the map with the obtained flow ratio for the obtained pump speed, and iii) updating the map with the obtained time average flow ratio, may be at least to some extent combined. The flow ratio can have an effect on relationship between pump speed and achieved flow. Quantifying this can help with feedforward accuracy and be useful to help suppress instability in feedback. As an example, a common cause of steady state error may occur in a continuous oscillating cycle when moving the valve drops flow, whereby the pump controller compensates by increasing flow, then the valve moves back in response to this, then the pumps decreases and reverses the compensation, then the valve moves and drops flow again, etc. As a further example, steady state error may occur when the valve drops both the flow and the flow requirement until some other limit is reached triggering excitation between two unstable poles.

Optionally in some examples, including in at least one preferred example, the method further comprises repeating, by the processing circuitry, the process of obtaining a measured flow ratio for a plurality of different positions of the mixing valve; and updating, by the processing circuitry, the map with the obtained flow ratios. A technical benefit may include a comprehensive mapping of the mixing valve, allowing for an individual calibration of the thermal management system.

Optionally in some examples, including in at least one preferred example, the method further comprises initiating, by the processing circuitry, startup of the thermal management system; and updating, by the processing circuitry, the map based on the initiated startup of the thermal management system. A technical benefit may include using high temperature differentials to improve accuracy and further reducing the risk for overheating.

Optionally in some examples, including in at least one preferred example, the method further comprises validating, by the processing circuitry, the obtained flow ratio, and updating, by the processing circuitry, the map only when the obtained flow ratio is valid. A technical benefit may include improve accuracy and robustness, as non-valid flow ratios will be disregarded for map updating.

Optionally in some examples, including in at least one preferred example, the method further comprises obtaining, by the processing circuitry, a mixing valve calibration request; sweeping, by the processing circuitry, the mixing valve through a set of positions; and updating, by the processing circuitry, the map with the obtained flow ratios for the set of positions. A technical benefit may include a fast approach to provide a comprehensive mapping of the mixing valve, allowing for an individual calibration of the thermal management system.

According to a fourth aspect of the disclosure, a computer program product is provided. The computer program product comprises program code for performing, when executed by the processing circuitry, the method of the third aspect. The fourth aspect of the disclosure may seek to provide a simple yet robust self-adaptive mapping of the mixing valve thereby allowing for more accurate control of the mixing valve and the associated thermal management system. A technical benefit may include better performance while still keeping the generalized characteristic as an open loop fallback strategy.

According to a fifth aspect of the disclosure, a non-transitory computer-readable storage medium is provided. The non-transitory computer-readable storage medium comprises instructions, which when executed by the processing circuitry, cause the processing circuitry to perform the method of the third aspect. The fifth aspect of the disclosure may seek to provide a simple yet robust self-adaptive mapping of the mixing valve thereby allowing for more accurate control of the mixing valve and the associated thermal management system. A technical benefit may include better performance while still keeping the generalized characteristic as an open loop fallback strategy.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

## BRIEF DESCRIPTION OF THE DRAWINGS

FIG. 1 is an exemplary side view of a vehicle according to an example.
FIG. 2 is an exemplary diagram of a thermal management system according to an example.
FIG. 3 is an exemplary diagram of a map adaptation control system according to an example.
FIG. 4 is a diagram showing flow ratio as a function of mixing valve position according to one example.
FIG. 5 is an exemplary diagram of a map adaptation control system according to an example.
FIG. 6 is a flow chart of an exemplary map adaptation method according to an example.
FIG. 7 is a schematic diagram of an exemplary computer system for implementing examples disclosed herein, according to an example.

## DETAILED DESCRIPTION

The detailed description set forth below provides information and examples of the disclosed technology with sufficient detail to enable those skilled in the art to practice the disclosure.

In the following various examples will be given all related to the general idea of enabling over defined feedback such that the mixing valve of the thermal management system is able to map itself. The map can be adaptively updated by data already available in the thermal management system. This can be done e.g. upon startup, as a regular calibration step, or when a deviation is determined.

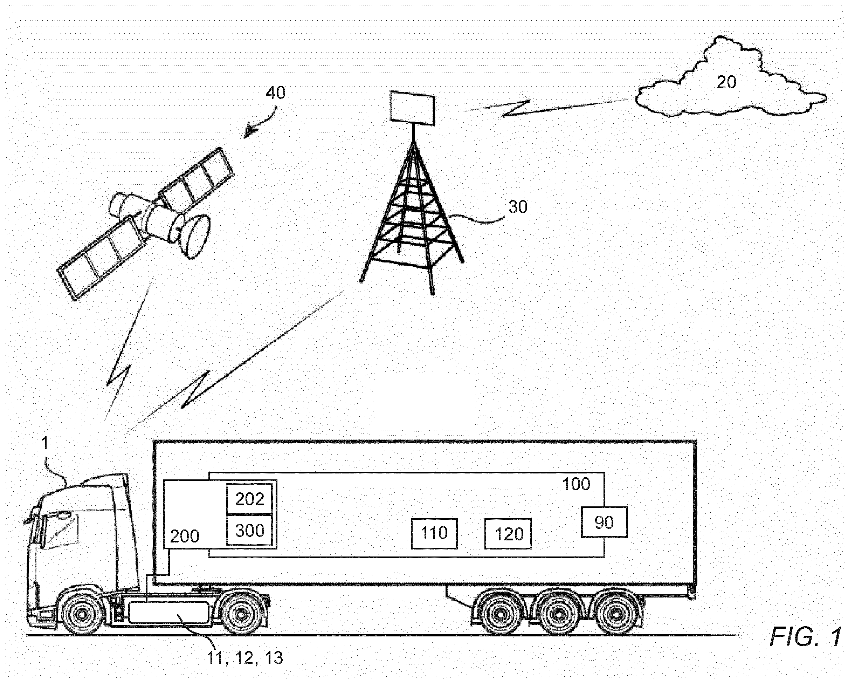

FIG. 1 is an exemplary view of a vehicle **1** according to one example. The vehicle **1** comprises at least thermal management system **200**. The at least one thermal management system **200** is configured to control the heat flow to and from one or more components of the vehicle **1**, for example to and from one or more fuel cell systems **11**, one or more battery systems **12**, or one or more electric propulsion systems **13**. The vehicle **1** is programmed to control the thermal management system **200**, as will be described further in the following.

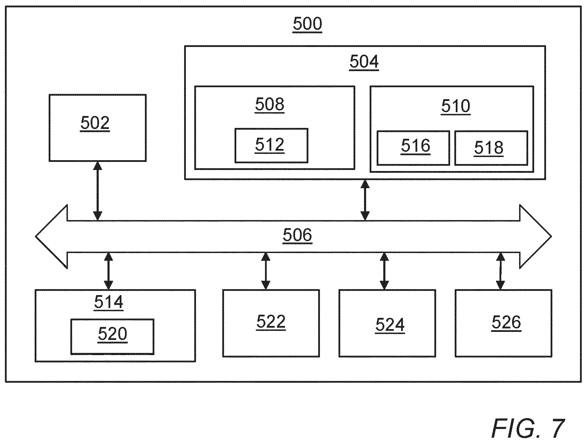

The vehicle **1** comprises, at least to some extent, processing circuitry **110** forming part of a computer system **100** (see **FIG. 7**). The processing circuitry **110** is configured to implement the thermal management system **200**, which in turn implements a map adaptation control system **300**.

The vehicle **1** may further comprise communications circuitry **90** configured to receive and/or send communications. The communications circuitry **90** may be configured to enable the vehicle **1** to communicate with one or more external devices or systems such as a cloud server **20**. The communication with the external devices or systems may be directly or via a communications interface such as a cellular communications interface **30**, such as a radio base station. The cloud server **20** may be any suitable cloud server exemplified by, but not limited to, Amazon Web Services (AWS), Microsoft Azure, Google Cloud Platform (GCP), IBM Cloud, Oracle Cloud Infrastructure (OCI), DigitalOcean, Vultr, Linode, Alibaba Cloud, Rackspace etc. The communications interface may be a wireless communications interface exemplified by, but not limited to, Wi-Fi, Bluetooth, Zigbee, Z-Wave, LoRa, Sigfox, 2G (GSM, CDMA), 3G (UMTS, CDMA2000), 4G (LTE), 5G (NR) etc. The communication circuitry **90** may, additionally or alternatively, be configured to enable the vehicle **1** to be operatively connected to a Global Navigation Satellite System (GNSS) **40** exemplified by, but not limited to, global positioning system (GPS), Globalnaya Navigatsionnaya Sputnikovaya Sistema (GLONASS), Galileo, BeiDou Navigation Satellite System, Navigation with Indian Constellation (NavIC) etc. The vehicle 1 may for example be configured to utilize data obtain from the GNSS **40** to determine a geographical location of the vehicle **1**.

The vehicle **1** in **FIG. 1** comprises the computer system **100** and the thermal management system **200**. The computer system **100** may be operatively connected to the thermal management system **200** and optionally to the communications circuitry **90** of the vehicle **1**. The computer system **100** comprises processing circuitry **110**. The computer system **100** may comprise a storage device **120**, advantageously a non-volatile storage device such as a hard disk drives (HDDs), solid-state drives (SSDs) etc. In some examples, the storage device **120** is operatively connected to the computer system **100**. The thermal management system **200** may comprise thermal management system processing circuitry **202**; the thermal management system processing circuitry **202** may be part of the processing circuitry **110** of the computer system **100.**

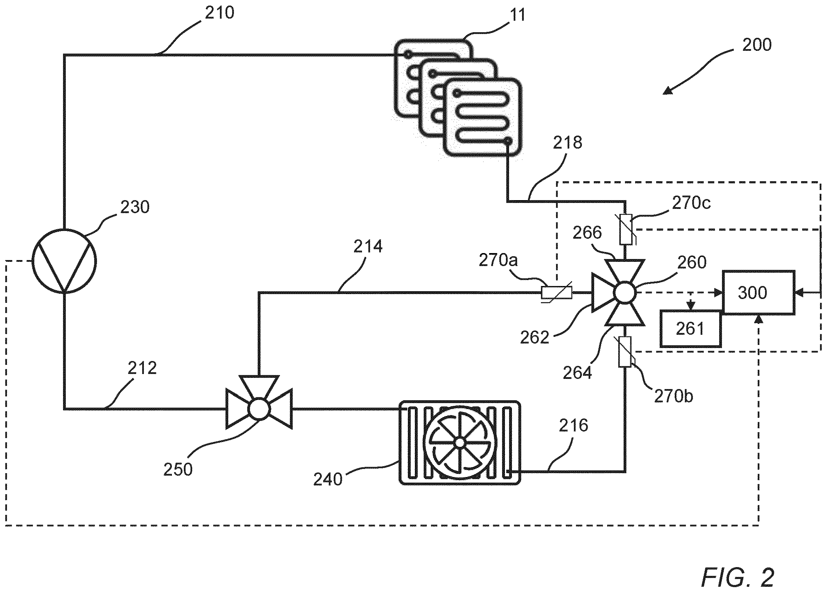

**FIG. 2** shows an example of a thermal management system **200.** The thermal management system **200** is shown as comprising a cooling circuit **210** for fuel cell system **11.** It should however be noted that this is one example only; the thermal management system **200** may be any electronically controlled thermal management system as long as it comprises a mixing valve and a map adaptation system **300** as will be further described below.

The cooling circuit **210** circulates cooling fluid using a pump **230.** Preferably, the pump **230** is electronically controlled such that the total flow through the cooling circuit **210** can be adjusted. The thermal management system **200** further comprises a radiator **240** and optionally a controllable bypass valve **250** arranged upstream the radiator **240.** Hence, by means of the bypass valve **250** the cooling circuit **210** is branched from a single conduit **212** to a hot conduit **214** and a cold conduit **216** passing the radiator **240.** The respective flow in the hot conduit **212** and in the cold conduit **214** may be determined by appropriate control of the bypass valve **250,** or the bypass valve **250** may be an entirely passive component. The hot conduit **214** is connected to a hot inlet **262** of a mixing valve **260,** while the cold conduit **216** is connected to a cold inlet **264** of the same mixing valve **260.** The mixing valve **260** is configured to blend the flow from the hot and cold conduits **214, 216** at a flow ratio being dependent on the position of the mixing valve **260.** The combined flow will exit a mixing valve outlet **266** which returns the flow to pass the fuel cell system **11.**

In order to control the operation of the mixing valve **260,** and thereby the overall performance of the thermal management system **200,** the mixing valve **260** is mapped with regards to the flow ratio (i.e. the ratio between the flow in the hot conduit **214** and the flow in the cold conduit **216**) as a function of the valve position. A desired flow ratio can thus be obtained by querying the map for the resulting mixing valve position providing the desired flow ratio, and subsequent control of the mixing valve **260** to obtain this specific position. The mixing valve **260** is connected to, or forms part of, the map adaptation control system **300.**

The mixing valve **260** is preferably controlled by a mixing valve controller **261.** A movable body inside the valve **260** may be actuated and moved depending on the desired flow ratio, and the mixing valve controller **261** is thus configured to control the position of the movable body of the mixing valve **260.** The mixing valve controller **261** may or may not form part of the map adaptation control system **300.**

In order to provide for the map adaptation control system **300,** the thermal management system **200** comprises a plurality of temperature sensors **270a-c.** In the shown example a first temperature sensor **270a** is arranged in the hot conduit **214** and the first temperature sensor **270a** is configured to provide temperature data for the flow in the hot conduit **214.** Preferably, the first temperature sensor **270a** is arranged as close to the mixing valve **260** as possible. A second temperature sensor **270b** is arranged in the cold conduit **216** and the second temperature sensor **270b** is configured to provide temperature data for the flow in the cold conduit **216.** Preferably, also the second temperature sensor **270b** is arranged as close to the mixing valve **260** as possible. A third temperature sensor **270c** is arranged in an exit conduit **218** guiding the combined flow out from the mixing valve **260.**

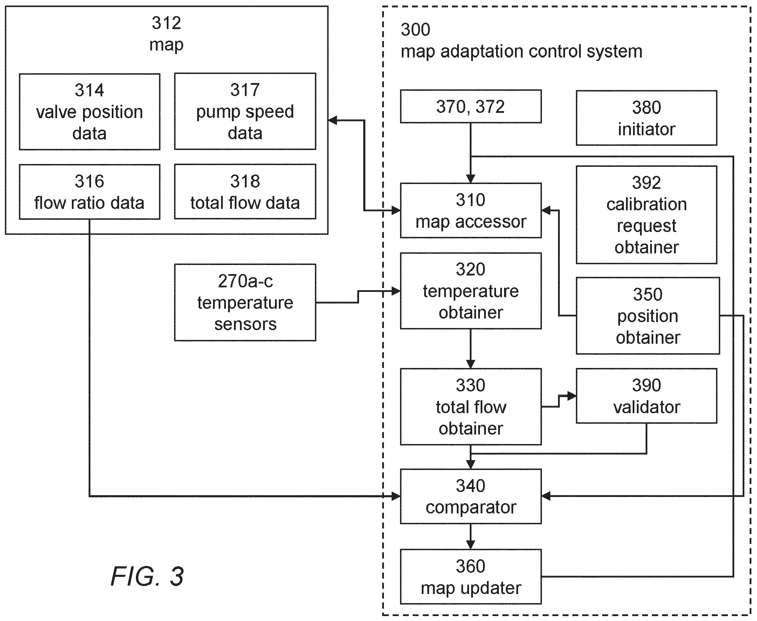

In **FIG. 3** an example of a map adaptation control system **300** is schematically shown. The map adaptation control system **300** comprises a map accessor **310** configured to provide access to a map **312.** The map **312** is in turn configured to map the characteristics of the mixing valve **260** by storing valve position data **314** and associated flow ratio data **316.** In such example the map is two dimensional, i.e. for each valve position an associated flow ratio is stored. In other examples the map is multi-dimensional, further storing other parameters and values thereof. Further parameters may comprise pump speed **317** and total flow **318.** The map **312** may be pre-filled with all or some data, or it may be initially empty for population by the map adaptation system **300.**

The map adaptation control system **300** further comprises a temperature obtainer **320.** The temperature obtainer **320** is configured to obtain the temperatures of the at least two incoming flows and the temperature of at least one outlet flow of the mixing valve **260.** Hence, the temperature obtainer **320** is preferably receiving sensor data from the first, second, and third temperature sensors **270a-c.**

The map adaptation control system **300** further comprises a flow ratio obtainer **330.** The flow ratio obtainer **330** is configured to obtain the actual flow ratio for at least one position of the mixing valve **260.** Preferably, the flow ratio obtainer **330** receives the determined temperatures from the temperature obtainer **320,** and the flow ratio is obtained by the flow ratio obtainer **330** using the formula:

$$\left(T_{cold\_inlet} \cdot \dot{m}_{cold\_inlet}\right) + \left(T_{hot\_inlet} \cdot \dot{m}_{hot\_inlet}\right) = \left(T_{outlet} \cdot \dot{m}_{outlet}\right).$$

Since $\Sigma \dot{m}_{inputs} = \Sigma \dot{m}_{outputs}$ the above formula can be simplified have the ratio of inlet mass flows expressed as:

$$Flow\_ratio = \frac{T^*_{outlet} - T_{hot\_inlet}}{T_{cold\_inlet} - T_{hot\_inlet}}.$$

The map adaptation control system **300** further comprises a comparator **340.** The comparator **340** is configured to determine that the obtained flow ration is different from the corresponding value of the map **312** for the same position of the mixing valve **260.** Hence, the map adaptation control system **300** also comprises a position obtainer **350** configured to obtain the current position of the mixing valve **260.** Mixing valve position data may e.g. be provided by the mixing valve **260** itself, or by a control unit for the mixing valve **260.**

The map adaptation control system **300** further comprises a map updater **360.** When the comparator **340** determines that the obtained total flow is different from the corresponding value of the map **312,** the map updater **360** is configured to update the map **312** with the obtained flow ratio. This may be achieved by the map updater **360** transmitting the obtainer flow ratio data to the map accessor **310,** which stores the obtainer flow ratio data to the map **312.**

The map adaptation control system **300** may further comprise a total flow obtainer **370** and/or a pump speed obtainer **372.** The total flow obtainer **370** may for example be connected to a flow meter arranged in the cooling circuit **210,** and the pump speed obtainer **372** may for example be connected to the pump **230,** or to an associated pump controller. The total flow obtainer **370** and/or the pump speed obtainer **372** may provide total flow data **318** and pump speed data **317** to the map accessor **310,** which in turn is allowed to use this data when updating the map **312** with regards to the flow ratio.

In some examples, the temperature obtainer **320** is configured to obtain a time average of the temperatures of the incoming flows and of the temperature of the outlet flow from the mixing valve **260.** For such examples the total flow obtainer **330** may be configured to obtain a time average of the actual flow ratio for the mixing valve position providing the obtained time average of the temperatures. In such examples the comparator **340** may be configured to determine that the measure time average flow ratio is different from the corresponding value of the map **312** for the same mixing valve position, and the map updater **360** may be configured to update the map **312** with the obtained time average flow ratio.

The map adaptation control system **300** may be programmed, or configured, to repeat the process of obtaining a measured flow ratio for a plurality of different positions of the mixing valve **260,** whereby the map **312** is updated with the obtained flow ratios. In practice this may be achieved by the temperature obtainer **320** receiving temperature data at certain time intervals, whereby the total flow obtainer **350,** the comparator **340,** and the map updater **360** are all configured to perform their respective functionality as described above.

The map adaptation control system **300** may also comprise an initiator **380.** The initiator **380** may be configured to receive a request to initiate startup of the thermal management system **200,** whereby the map adaptation control system **300** is configured to perform all actions in order to update the map **312** based on the initiated startup of the thermal management system **200.**

As shown in **FIG. 3** the map adaptation control system **300** further comprises a validator **390.** The validator **390** is configured to validate the obtained flow ratio. For example, if the flow ratio obtainer **330** would fail to determine a flow ratio, or if the obtained flow ratio is clearly erroneous, the validator **390** may disqualify the obtained flow ratio whereby the map updater **360** will be prevented from updating the map **312.** Optionally, the validator **390** may operate with regards to pre-set tolerance values or pre-set fixed thresholds. If the map **312** is already populated, the validator **390** may for example validate the obtained flow ratio if it corresponds to the value of the map **312** $\pm$ 20%.

The map adaptation control system **300** may further comprise a calibration request obtainer **392.** The calibration request obtainer **392** is configured to obtain a mixing valve **260** calibration request. When receiving such request, the map adaptation control system **300** is configured to sweep the mixing valve **260** through a set of different positions, and to update the map **312** with the obtained flow ratios for the set of positions.

On a general level, the map adaptation control system **300** makes use of sufficiently over-defined feedbacks so as to be able to map itself. This means the observation of the inputs and outputs is sufficiently reliable and accurate that the map adaptation control system **300** can re-write its own look-up table or map **312** or maintain a closed-loop and/or adaptive feedback system that provides better performance.

The flow ratio can be plotted against the electronic mixing valve position to generate a diversion-angle map without the use of flowmeters. This can either be done by populating the map **312** as points become operated or by varying the valve position with a flow and different temperatures available as a mapping or commissioning procedure.

If the measured flow ratio deviates from the mapped flow ratio at a given point this error can be used to adjust the map **312.** These errors can be averaged over time and/or applied intermittently to avoid a dynamically changing map.

As explained above, sweeps can be used to map and verify function of the mixing valve **260.** This may be performed during startup where high temperature differentials can improve accuracy and/or a full sweep can be performed without over-heating. Further, a heater may be used to perform this while systems are shutdown or warming.

If the temperature sensors **270a-c** and the mixing valve **260** are sufficiently fast then short sweeps can exploit the capacitance of larger devices to perform checks during normal operation.

While a pre-mapped solution can be operated without all temperatures being known a self-mapping solution ideally needs to have all temperatures known, or at least for some flows or pressures to cover the degrees of freedom.

The flow distribution map **312** may be generated by comparing the flow ratio, as calculated from the temperatures of the input and output flows at different valve angles. This can be used to generate an individual calibration for the associated vehicle **1.**

Following this a mixing valve controller uses the map **312** to find the appropriate valve position for the current condition. Furthermore, it repeats the same calculation to check if the real flow distribution matches the expected flow distribution at this angle or position.

Steady-state sampling, moving average, or other related methods can then be used to correct any error of the map **312** by updating the adaptive map **312** when appropriate. Depending on the system appropriate may be regular changes such as temperature and humidity dependence or longer term due to wear, service events or system changes.

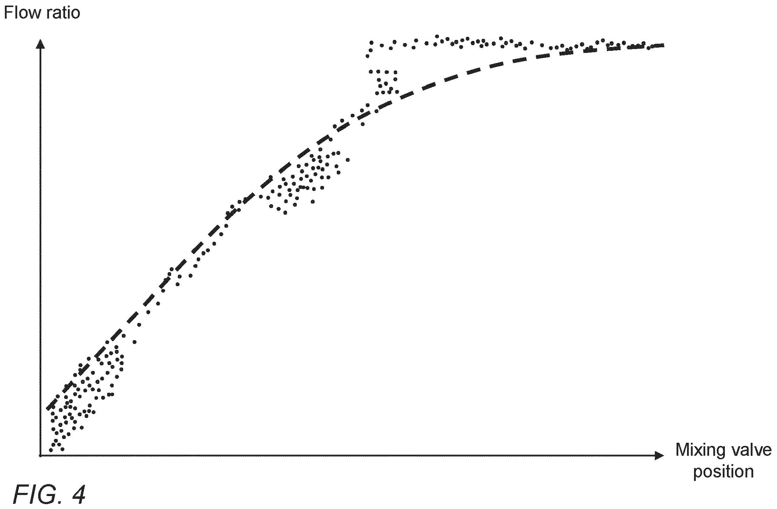

An example is shown in **FIG. 4.** On the x-axis is the backlash compensated valve position. The flow ratio is plotted on the y-axis and the dashed line shows the value expected by the mixing valve controller while the plotted dots show the actual flow ratio observed and calculated from the observed temperatures by the map adaptation control system **300.**

It can be seen that by taking the average flow ratio for points located at a given position a new map **312** or correction table can be generated to adapt the mixing valve controller to match the response.

Furthermore, by separating the mapping into values taken during upward and downward movements the hysteresis can be obtained as the difference between the two maps. This can also be taken from outlier-rejected extremes in binned intervals, by sweeping for minimum noise or deliberate detection sweeps, or similar, and then used for backlash compensation.

By traversing the actuator across a sinusoid with amplitude greater than the backlash then the backlash can simply be measured as the sum of the absolute difference between the actual (or requested) actuator position and the observed valve position calculated. Ideally this takes place over a relatively small amplitude so as not to disrupt the output from the controller too much but if the backlash measured is too close to the amplitude of the sweep then the amplitude should be increased until a significant difference exists. Therefore this may also be an adaptive function.

There are also ways to calculate the backlash without overlaying a disturbance. For example the mapping already performed as a mixing valve actuator moves around its normal control functions can be split depending on the direction of movement. Furthermore measurements not preceded by a reasonable amount of movement without significant movement in the opposite direction can be excluded so as to avoid points within the lash affecting the result. This could also produce more of a "lash map" without need to run steady state points at a range of position which could be helpful for diagnostics.

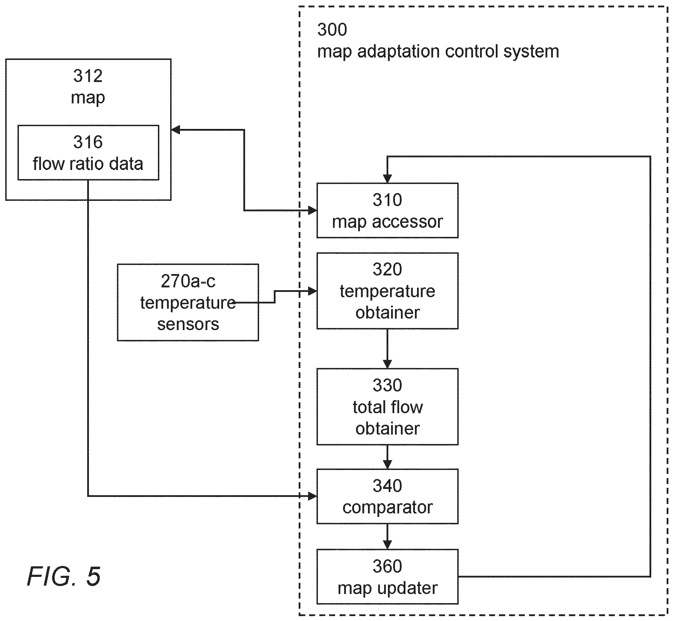

**FIG. 5** shows a map adaptation control system **300** according to one example. The map adaptation control system **300** is preferably implemented by a computer system comprising processing circuitry. The map adaptation control system **300** comprises a map accessor **310** configured to access a map **312** representing the flow ratio as a function of a position of a mixing valve. The mixing valve **260** is configured to provide a specific ratio between at least two incoming flows based on a position of the mixing valve, said mixing valve forming part of a thermal management system **200.**

The map adaptation control system **300** further comprises a temperature obtainer **320** configured to obtain the temperatures of the at least two incoming flows and the temperature of at least one outlet flow of the mixing valve.

The map adaptation control system **300** further comprises a total flow obtainer **330** configured to obtain the actual flow ratio for at least one position of the mixing valve based on the obtained temperatures.

The map adaptation control system **300** further comprises a comparator **340** configured to determine that the obtained flow ratio is different from the corresponding value of the map for the same mixing valve position.

The map adaptation control system **300** further comprises map updater **360** configured to update the map with the obtained flow ratio.

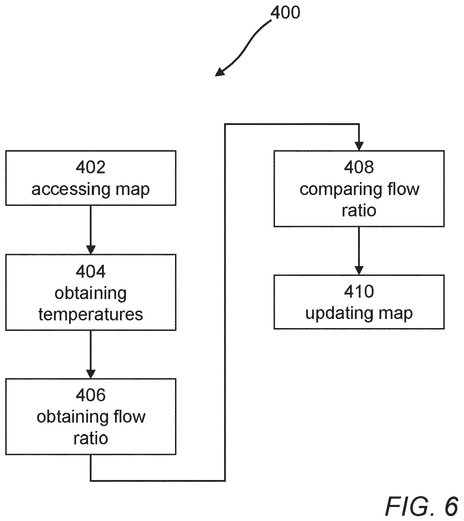

**FIG. 6** is a schematic flowchart of a method **400.** The method **400** is preferably a computer-implemented method for use with a mixing valve **260** forming part of a thermal management system **200** and being configured to provide a specific ratio between at least two incoming flows based on a position of the mixing valve **260.** The method **400** comprises accessing **402,** by processing circuitry of a computer system, a map **312** representing the flow ratio as a function of a position of the mixing valve **260.** The method **400** further comprises obtaining **404,** by the processing circuitry, the temperatures of the at least two incoming flows and the temperature of at least one outlet flow of the mixing valve **260.** The method **400** also comprises obtaining **406,** by the processing circuitry, the actual flow ratio for at least one position of the mixing valve **260** based on the obtained temperatures. The method **400** comprises determining **408,** by the processing circuitry, that the obtained flow ratio is different from the corresponding value of the map **312** for the same valve position; and further updating **410,** by the processing circuitry, the map with the obtained flow ratio.

**FIG. 7** is a schematic diagram of a computer system **500** for implementing examples disclosed herein. The computer system **500** is adapted to execute instructions from a computer-readable medium to perform these and/or any of the functions or processing described herein. The computer system **500** may be connected (e.g., networked) to other machines in a LAN, an intranet, an extranet, or the Internet. While only a single device is illustrated, the computer system **500** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **500** may comprise at least one computing device or electronic device capable of including firmware, hardware, and/or executing software instructions to implement the functionality described herein. The computer system **500** may include processing circuitry **502** (e.g., processing circuitry including one or more processor devices or control units), a memory **504,** and a system bus **506**. The computer system **500** may include at least one computing device having the processing circuitry **502**. The system bus **506** provides an interface for system components including, but not limited to, the memory **504** and the processing circuitry **502**. The processing circuitry **502** may include any number of hardware components for conducting data or signal processing or for executing computer code stored in memory **504**. The processing circuitry **502** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **502** may further include computer executable code that controls operation of the programmable device.

The system bus **506** may be any of several types of bus structures that may further interconnect to a memory bus (with or without a memory controller), a peripheral bus, and/or a local bus using any of a variety of bus architectures. The memory **504** may be one or more devices for storing data and/or computer code for completing or facilitating methods described herein. The memory **504** may include database components, object code components, script components, or other types of information structure for supporting the various activities herein. Any distributed or local memory device may be utilized with the systems and methods of this description. The memory **504** may be communicably connected to the processing circuitry **502** (e.g., via a circuit or any other wired, wireless, or network connection) and may include computer code for executing one or more processes described herein. The memory **504** may include non-volatile memory **508** (e.g., read-only memory (ROM), erasable programmable read-only memory (EPROM), electrically erasable programmable read-only memory (EEPROM), etc.), and volatile memory **510** (e.g., random-access memory (RAM)), or any other medium which can be used to carry or store desired program code in the form of machine-executable instructions or data structures and which can be accessed by a computer or other machine with processing circuitry **502**. A basic input/output system (BIOS) **512** may be stored in the non-volatile memory **508** and can include the basic routines that help to transfer information between elements within the computer system **500.**

The computer system **500** may further include or be coupled to a non-transitory computer-readable storage medium such as the storage device **514,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **514** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **514** and/or in the volatile memory **510,** which may include an operating system **516** and/or one or more program modules **518**. All or a portion of the examples disclosed herein may be implemented as a computer program **520** stored on a transitory or non-transitory computer-usable or computer-readable storage medium (e.g., single medium or multiple media), such as the storage device **514,** which includes complex programming instructions (e.g., complex computer-readable program code) to cause the processing circuitry **502** to carry out actions described herein. Thus, the computer-readable program code of the computer program **520** can comprise software instructions for implementing the functionality of the examples described herein when executed by the processing circuitry **502**. In some examples, the storage device **514** may be a computer program product (e.g., readable storage medium) storing the computer program **520** thereon, where at least a portion of a computer program **520** may be loadable (e.g., into a processor) for implementing the functionality of the examples described herein when executed by the processing circuitry **502**. The processing circuitry **502** may serve as a controller or control system for the computer system **500** that is to implement the functionality described herein.

The computer system **500** may include an input device interface **522** configured to receive input and selections to be communicated to the computer system **500** when executing instructions, such as from a keyboard, mouse, touch-sensitive surface, etc. Such input devices may be connected to the processing circuitry **502** through the input device interface **522** coupled to the system bus **506** but can be connected through other interfaces, such as a parallel port, an Institute of Electrical and Electronic Engineers (IEEE) 1394 serial port, a Universal Serial Bus (USB) port, an IR interface, and the like. The computer system **500** may include an output device interface **524** configured to forward output, such as to a display, a video display unit (e.g., a liquid crystal display (LCD) or a cathode ray tube (CRT)). The computer system **500** may include a communications interface **526** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

**Example 1:** A computer system comprising processing circuitry configured to: access a map (312) representing the flow ratio as a function of a position of a mixing valve (260) being configured to provide a specific ratio between at least two incoming flows based on a position of the mixing valve (260), said mixing valve (260) forming part of a thermal management system (200); obtain the temperatures of the at least two incoming flows and the temperature of at least one outlet flow of the mixing valve (260); obtain the actual flow ratio for at least one position of the mixing valve (260) based on the obtained temperatures; determine that the obtained flow ratio is different from the corresponding value of the map (312) for the same mixing valve position; and update the map (312) with the obtained flow ratio.

**Example 2:** The computer system of Example 1, wherein the processing circuitry is further configured to: obtain the total flow through the mixing valve (260); and update the map (312) with the obtained flow ratio for the obtained total flow.

**Example 3:** The computer system of Example 1 or 2, wherein the processing circuitry is further configured to: obtain a pump (230) speed; and update the map (312) with the obtained flow ratio for the obtained pump (230) speed.

**Example 4:** The computer system of any of Examples 1-3, wherein the processing circuitry is further configured to: obtain a time average of the temperatures of the at least two incoming flows and of the temperature of at least one outlet flow of the mixing valve (260); obtain a time average of the actual flow ratio for at least one position of the mixing valve (260) based on the obtained temperatures; determine that the measured time average flow ratio is different from the corresponding value of the map (312) for the same position of the mixing valve (260); and update the map (312) with the obtained time average flow ratio.

**Example 5:** The computer system of any of Examples 1-4, wherein the processing circuitry is further configured to: repeat the process of obtaining a measured flow ratio for a plurality of different positions of the mixing valve (260); and update the map (312) with the obtained flow ratios.

**Example 6:** The computer system of any of Examples 1-5, wherein the processing circuitry is further configured to: initiate startup of the thermal management system (200); and update the map (312) based on the initiated startup of the thermal management system (200).

**Example 7:** The computer system of any of Examples 1-6, wherein the processing circuitry is further configured to: validate the obtained flow ratio, and update the map (312) only when the obtained flow ratio is valid.

**Example 8:** The computer system of any of Examples 1-7, wherein the processing circuitry is further configured to: obtain a mixing valve (260) calibration request; sweep the mixing valve (260) through a set of positions; and update the map (312) with the obtained flow ratios for the set of positions of the mixing valve (260).

**Example 9:** The computer system of Example 1, wherein the processing circuitry is further configured to: obtain the total flow through the mixing valve (260) and the pump (230) speed; and update the map (312) with the obtained flow ratio for the obtained total flow and for the obtained pump (230) speed; obtain a time average of the temperatures of the at least two incoming flows and of the temperature of at least one outlet flow of the mixing valve (260); obtain a time average of the actual flow ratio for at least one position of the mixing valve (260) based on the obtained temperatures; determine that the measured time average flow ratio is different from the corresponding value of the map (312) for the same position of the mixing valve (260); and update the map (312) with the obtained time average flow ratio; repeat the process of obtaining a measured flow ratio for a plurality of different positions of the mixing valve (312) and for a plurality of different values of the total flow and/or the pump (230) speed; and update the map (312) with the obtained flow ratios; initiate startup of the thermal management system (200); and update the map (312) based on the initiated startup of the thermal management system (200); validate the obtained flow ratio, and update the map (312) only when the obtained flow ratio is valid; obtain a mixing valve (260) calibration request; sweep the mixing valve (260) through a set of positions; and update the map (312) with the obtained flow ratios for the set of positions of the mixing valve (260).

**Example 10:** A vehicle (1), comprising a thermal management system (200) having a mixing valve (260), and the computer system of any of Examples 1-9.

**Example 11:** A computer-implemented method (400), comprising: accessing (402), by processing circuitry of a computer system, a map (312) representing the flow ratio as a function of a position of a mixing valve (260) forming part of a thermal management system (200) and being configured to provide a specific ratio between at least two incoming flows based on a position of the mixing valve (260); obtaining (404), by the processing circuitry, the temperatures of the at least two incoming flows and the temperature of at least one outlet flow of the mixing valve (260); obtaining (406), by the processing circuitry, the actual flow ratio for at least one position of the mixing valve (260) based on the obtained temperatures; determining (408), by the processing circuitry, that the obtained flow ratio is different from the corresponding value of the map (312) for the same position of the mixing valve (260); and updating (410), by the processing circuitry, the map (312) with the obtained flow ratio.

**Example 12:** The method of Example 11, further comprising: obtaining, by the processing circuitry, the total flow through the mixing valve; and updating, by the processing circuitry, the map with the obtained flow ratio for the obtained total flow.

**Example 13:** The method of Example 11 or 12, further comprising: obtaining, by the processing circuitry, the pump speed; and updating, by the processing circuitry, the map with the obtained flow ratio for the obtained pump speed.

**Example 14:** The method of any of Examples 11-13, further comprising: obtaining, by the processing circuitry, a time average of the temperatures of the at least two incoming flows and of the temperature of at least one outlet flow of the mixing valve; obtaining, by the processing circuitry, a time average of the actual flow ratio for at least one position of the mixing valve based on the obtained temperatures; determining, by the processing circuitry, that the measured time average flow ratio is different from the corresponding value of the map for the same valve position; and updating, by the processing circuitry, the map with the obtained time average flow ratio.

**Example 15:** The method of any of Examples 11-14, further comprising: repeating, by the processing circuitry, the process of obtaining a measured flow ratio for a plurality of different positions of the mixing valve; and updating, by the processing circuitry, the map with the obtained flow ratios.

**Example 16:** The method of any of Examples 1-5, further comprising: initiating, by the processing circuitry, startup of the thermal management system; and updating, by the processing circuitry, the map based on the initiated startup of the thermal management system.

**Example 17:** The method of any of Examples 11-16, further comprising: validating, by the processing circuitry, the obtained flow ratio, and updating, by the processing circuitry, the map only when the obtained flow ratio is valid.

**Example 18:** The method of any of Examples 11-17, further comprising: obtaining, by the processing circuitry, a mixing valve calibration request; sweeping, by the processing circuitry, the mixing valve through a set of positions; and updating, by the processing circuitry, the map with the obtained flow ratios for the set of positions.

**Example 19:** A computer program product comprising program code for performing, when executed by the processing circuitry, the method of any of Examples 11-18.

**Example 20:** A non-transitory computer-readable storage medium comprising instructions, which when executed by the processing circuitry, cause the processing circuitry to perform the method of any of Examples 11-18.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

**Claims**

1. A computer system comprising processing circuitry configured to:

   access a map (312) representing the flow ratio as a function of a position of a mixing valve (260) being configured to provide a specific ratio between at least two incoming flows based on a position of the mixing valve (260), said mixing valve (260) forming part of a thermal management system (200);
   obtain the temperatures of the at least two incoming flows and the temperature of at least one outlet flow of the mixing valve (260);
   obtain the actual flow ratio for at least one position of the mixing valve (260) based on the obtained temperatures;
   determine that the obtained flow ratio is different from the corresponding value of the map (312) for the same mixing valve position; and
   update the map (312) with the obtained flow ratio.

2. The computer system of claim 1, wherein the processing circuitry is further configured to:

   obtain the total flow through the mixing valve (260); and
   update the map (312) with the obtained flow ratio for the obtained total flow.

3. The computer system of claim 1 or 2, wherein the processing circuitry is further configured to:

   obtain a pump (230) speed; and
   update the map (312) with the obtained flow ratio for the obtained pump (230) speed.

4. The computer system of any of claims 1-3, wherein the processing circuitry is further configured to:

   obtain a time average of the temperatures of the at least two incoming flows and of the temperature of at least one outlet flow of the mixing valve (260);
   obtain a time average of the actual flow ratio for at least one position of the mixing valve (260) based on the obtained temperatures;
   determine that the measured time average flow ratio is different from the corresponding value of the map (312) for the same position of the mixing valve (260); and
   update the map (312) with the obtained time average flow ratio.

5. The computer system of any of claims 1-4, wherein the processing circuitry is further configured to:

   repeat the process of obtaining a measured flow ratio for a plurality of different positions of the mixing valve (260); and
   update the map (312) with the obtained flow ratios.

6. The computer system of any of claims 1-5, wherein the processing circuitry is further configured to:

   initiate startup of the thermal management system (200); and
   update the map (312) based on the initiated startup of the thermal management system (200).

7. The computer system of any of claims 1-6, wherein the processing circuitry is further configured to:

   validate the obtained flow ratio, and
   update the map (312) only when the obtained flow ratio is valid.

8. The computer system of any of claims 1-7, wherein the processing circuitry is further configured to:

   obtain a mixing valve (260) calibration request;
   sweep the mixing valve (260) through a set of positions; and
   update the map (312) with the obtained flow ratios for the set of positions of the mixing valve (260).

9. The computer system of claim 1, wherein the processing circuitry is further configured to:

   obtain the total flow through the mixing valve (260) and the pump (230) speed; and
   update the map (312) with the obtained flow ratio for the obtained total flow and for the obtained pump (230) speed;
   obtain a time average of the temperatures of the at least two incoming flows and of the temperature of at least one outlet flow of the mixing valve (260);
   obtain a time average of the actual flow ratio for at least one position of the mixing valve (260) based on the obtained temperatures;
   determine that the measured time average flow ratio is different from the corresponding value of the map (312) for the same position of the mixing valve (260); and
   update the map (312) with the obtained time average flow ratio;
   repeat the process of obtaining a measured flow ratio for a plurality of different positions of the mixing valve (312) and for a plurality of different values of the total flow and/or the pump (230) speed; and
   update the map (312) with the obtained flow ratios;
   initiate startup of the thermal management system (200); and
   update the map (312) based on the initiated startup of the thermal management system (200);
   validate the obtained flow ratio, and
   update the map (312) only when the obtained flow ratio is valid;
   obtain a mixing valve (260) calibration request;
   sweep the mixing valve (260) through a set of positions; and
   update the map (312) with the obtained flow ratios for the set of positions of the mixing valve (260).

10. A vehicle (1), comprising a thermal management system (200) having a mixing valve (260), and the computer system of any of claims 1-9.

11. A computer-implemented method (400), comprising:

   accessing (402), by processing circuitry of a computer system, a map (312) representing the flow ratio as a function of a position of a mixing valve (260) forming part of a thermal management system (200) and being configured to provide a specific ratio between at least two incoming flows based on a position of the mixing valve (260);
   obtaining (404), by the processing circuitry, the temperatures of the at least two incoming flows and the temperature of at least one outlet flow of the mixing valve (260);
   obtaining (406), by the processing circuitry, the actual flow ratio for at least one position of the mixing valve (260) based on the obtained temperatures;
   determining (408), by the processing circuitry, that the obtained flow ratio is different from the corresponding value of the map (312) for the same position of the mixing valve (260); and
   updating (410), by the processing circuitry, the map (312) with the obtained flow ratio.

12. The method of claim 11, further comprising:

   obtaining, by the processing circuitry, the total flow through the mixing valve and/or the pump speed; and
   updating, by the processing circuitry, the map with the obtained flow ratio for the obtained total flow and/or for the obtained pump speed.

13. The method of any of claims 11-12, further comprising:

   repeating, by the processing circuitry, the process of obtaining a measured flow ratio for a plurality of different positions of the mixing valve; and
   updating, by the processing circuitry, the map with the obtained flow ratios.

14. A computer program product comprising program code for performing, when executed by the processing circuitry, the method of any of claims 11-13.

15. A non-transitory computer-readable storage medium comprising instructions, which when executed by the processing circuitry, cause the processing circuitry to perform the method of any of claims 11-13.

FIG. 1

FIG. 2

300
map adaptation control system

312
map

- 314 valve position data
- 316 flow ratio data
- 317 pump speed data
- 318 total flow data

370, 372

310 map accessor

320 temperature obtainer

330 total flow obtainer

340 comparator

360 map updater

380 initiator

392 calibration request obtainer

350 position obtainer

390 validator

270a-c temperature sensors

FIG. 3

*FIG. 4*

FIG. 5

300
map adaptation control system

312
map

316
flow ratio data

310
map accessor

270a-c
temperature
sensors

320
temperature
obtainer

330
total flow
obtainer

340
comparator

360
map updater

EP 4 636 529 A1

400

402
accessing map

404
obtaining
temperatures

406
obtaining flow
ratio

408
comparing flow
ratio

410
updating map

*FIG. 6*

*FIG. 7*

Europäisches
Patentamt

European
Patent Office

Office européen
des brevets

# EUROPEAN SEARCH REPORT

**Application Number**

EP 24 17 1031

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 102 61 793 A1 (BOSCH GMBH ROBERT [DE]) 15 July 2004 (2004-07-15) | 1-15 | INV. G05D23/13 |
| Y | * paragraphs [0019], [0028]; figures 1, 4 * | 6-9 | |
| | ----- | | |
| Y | US 5 511 723 A (EKI TOSHIO [JP] ET AL) 30 April 1996 (1996-04-30) * S520; figures 13,17 * | 6-9 | |
| | ----- | | |

**TECHNICAL FIELDS
SEARCHED     (IPC)**

G05D

The present search report has been drawn up for all claims

| Place of search | Date of completion of the search | Examiner |
|---|---|---|
| Munich | 17 September 2024 | Gundlach, Harald |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 24 17 1031

This annex lists the patent family members relating to the patent documents cited in the above-mentioned European search report.
The members are as contained in the European Patent Office EDP file on
The European Patent Office is in no way liable for these particulars which are merely given for the purpose of information.

17-09-2024

| Patent document cited in search report | | Publication date | Patent family member(s) | | Publication date |
|---|---|---|---|---|---|
| DE 10261793 | A1 | 15-07-2004 | DE | 10261793 A1 | 15-07-2004 |
| | | | FR | 2849106 A1 | 25-06-2004 |
| | | | JP | 2004204851 A | 22-07-2004 |
| | | | US | 2004122612 A1 | 24-06-2004 |
| US 5511723 | A | 30-04-1996 | CA | 2128725 A1 | 09-06-1994 |
| | | | EP | 0624836 A1 | 17-11-1994 |
| | | | KR | 950700565 A | 16-01-1995 |
| | | | TW | 237395 B | 01-01-1995 |
| | | | US | 5511723 A | 30-04-1996 |
| | | | WO | 9412920 A1 | 09-06-1994 |

EPO FORM P0459

For more details about this annex : see Official Journal of the European Patent Office, No. 12/82